# EUROPÄISCHE PATENTSCHRIFT

(11) **EP 1 373 851 B1**
(45) Veröffentlichungstag und Bekanntmachung des Hinweises auf die Patenterteilung: **05.03.2008**
(21) Anmeldenummer: 02722257.9
(22) Anmeldetag: 21.03.2002
(51) Int. Cl.: G01L 9/00

(54) **DRUCKSENSOR**
PRESSURE SENSOR
CAPTEUR DE PRESSION

(30) Priorität: 22.03.2001 DE 10114751
(43) Veröffentlichungstag der Anmeldung: 02.01.2004
(73) Patentinhaber: Kurz, Gerhard, 75382 Althengstett (DE)
(72) Erfinder: KURZ, Gerhard, 75382 Althengstett (DE); SCHULZ, Detlef, 72657 Altenriet (DE)
(74) Vertreter: Lindner, Michael
(86) Internationale Anmeldenummer: PCT/EP2002/003145
(87) Internationale Veröffentlichungsnummer: WO 2002/077597

(56) Entgegenhaltungen:
- EP-A- 0 580 458
- US-A- 3 100 997
- US-A- 4 122 337
- US-A- 5 005 584

## Beschreibung

Die vorliegende Erfindung betrifft einen Drucksensor mit den Merkmalen des Oberbegriffs des Anspruchs 1.

Ein Drucksensor der vorgenannten Art ist beispielsweise aus US4122337 oder aus US 3,100,997 A bekannt.

Ein weiterer Drucksensor ist beispielsweise aus DE 79 06 132 U1 bekannt. Auch die DE 74 05 439 U1 zeigt einen Drucksensor.

All die vorgenannten Drucksensoren haben den Nachteil, daß sie hinsichtlich ihres Aufbaus aufwendig konstruiert sind, so daß ein Einsatz in Massenprodukten aufgrund der hohen Kosten nicht möglich ist. Darüber hinaus sind die jeweiligen Aufbauten empfindlich gegen Erschütterungen, so daß auch diese Eigenschaften den Einsatz in großem Umfang verhindern.

Vor diesem Hintergrund besteht die Aufgabe der vorliegenden Erfindung darin, einen Drucksensor der vorgenannten Art so weiterzubilden, daß er einerseits kostengünstig herstellbar ist und andererseits klein baut, ohne jedoch die Sensibilität zu verschlechtern.

Diese Aufgabe wird bei dem eingangs genannten Drucksensor dadurch gelöst, daß eine Halteeinrichtung vorgesehen ist, die in das Gehäuse einbringbar ist und jeweils eine Aufnahmeöffnung für das Lichtmittel und das Lichtdetektionsmittel umfaßt, wobei die Halteeinrichtung die erste und die zweite Reflexionsfläche, vorzugsweise das erste und das zweite Prisma im Bereich der jeweiligen Aufnahmeöffnung trägt und aus einem lichtdurchlässigen Material, vorzugsweise einem Kunststoff, hergestellt ist.

Diese Art der Anordnung führt zu einem sehr kompakten Aufbau des Drucksensors und ermöglicht eine sehr kostengünstige Herstellung. Insbesondere lassen sich durch den Einsatz von Prismen zur Ablenkung des Lichtstrahls sehr einfach Standardbauteile einsetzen, ohne die Bauform zu vergrößern. Darüber hinaus ist es durch die Verwendung von Prismen möglich, die normale Geometrie beispielsweise von Standard-LEDs einzusetzen und die ganze Strahlbreite der LEDs zu nutzen, so daß der detektierbare Weg der auslenkbaren Membran zunimmt. Damit kann der Meßbereich des Drucksensors oder seine Empfindlichkeit vergrößert werden.

An dieser Stelle sei noch angemerkt, daß unter dem Begriff "optische Achse" jene Achse des Lichtmittels bzw. des Lichtdetektionsmittels zu verstehen ist, die die Hauptstrahlrichtung angibt. Ein weiterer Vorteil ist darin zu sehen, daß die Ausrichtung des Lichtmittels bzw. des Lichtdetektionsmittels zu dem jeweiligen Prisma durch die Halteeinrichtung bereits vorgegeben ist, so daß es hier beim Zusammenbau nicht zu Fehlern kommen kann. Das Lichtmittel bzw. das Lichtdetektionsmittel muß lediglich in die Aufnahmeöffnung der Halteeinrichtung eingesteckt werden und hat dann die gewünschte Ausrichtung zu dem jeweiligen Prisma. Darüber hinaus führt die Integration der Prismen in der Halteeinrichtung zu einem sehr kostengünstigen Aufbau. Eine weitere Reduzierung der Kosten wird dadurch erreicht, daß die Halteeinrichtung aus einem lichtdurchlässigen Material, vorzugsweise einem Kunststoff, hergestellt ist. Das heißt mit anderen Worten, daß die gesamte Halteeinrichtung mit den Prismen aus einem Material hergestellt ist.

In einer bevorzugten Weiterbildung des erfindungsgemäßen Drucksensors weist der Lichtblocker einen kegelstumpfförmigen Abschnitt auf, der im Strahlweg liegt.

Diese Maßnahme ermöglicht einen sehr einfachen und damit kostengünstigen Aufbau des Lichtblockers, wobei ferner der Vorteil besteht, daß es aufgrund der Rotationssymmetrie dieses Abschnitts beim Zusammenbau zu keinen Ausrichtungsfehlern des Lichtblockers kommen kann.

In einer bevorzugten Weiterbildung weist die Halteeinrichtung zumindest zwei außen angebrachte Rastnasen auf, die mit entsprechenden Ausnehmungen im Gehäuse rastend zusammenwirken.

Diese Maßnahme hat den Vorteil, daß der Zusammenbau des Drucksensors sehr einfach, schnell und werkzeuglos durchgeführt werden kann.

In einer bevorzugten Weiterbildung weist das Gehäuse eine innen liegende, über den gesamten Umfang sich erstreckende Schulter auf, auf der eine entsprechende Auflagefläche der Halteeinrichtung aufliegt, wobei zwischen der Auflagefläche und der Schulter ein Randbereich der Membran festgeklemmt ist.

Diese Maßnahme hat den Vorteil, daß eine eigene Befestigung der Membran innerhalb des Gehäuses nicht erforderlich ist. Vielmehr erfolgt die Befestigung der Membran innerhalb des Gehäuses durch Aufstecken der Halteeinrichtung, die die Membran an der Schulter des Gehäuses festklemmt. Der Vorteil kann in einer weiteren Vereinfachung der Herstellung gesehen werden.

In einer bevorzugten Weiterbildung ist das Lichtmittel eine LED und das Lichtdetektionsmittel ein Phototransistor.

Diese Maßnahme hat den Vorteil, daß Standardbauteile eingesetzt werden können, so daß auf teure Spezialbauelemente verzichtet werden kann.

Weitere Vorteile und Ausgestaltungen der Erfindung ergeben sich aus der Beschreibung und der beiliegenden Zeichnung.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung wird nun anhand eines Ausführungsbeispiels mit Bezug auf die Zeichnungen näher erläutert. Dabei zeigen:
- Fig. 1: eine schematische Querschnittsdarstellung des erfindungsgemäßen Drucksensors;
- Fig. 2: zwei perspektivische Ansichten einer Halteeinrichtung;
- Fig. 3: zwei perspektivische Ansichten des Gehäuses;
- Fig. 4: eine perspektivische Ansicht einer Membran;
- Fig. 5: eine perspektivische Ansicht eines Federtellers; und
- Fig. 6: eine perspektivische Ansicht eines Lichtblockers.

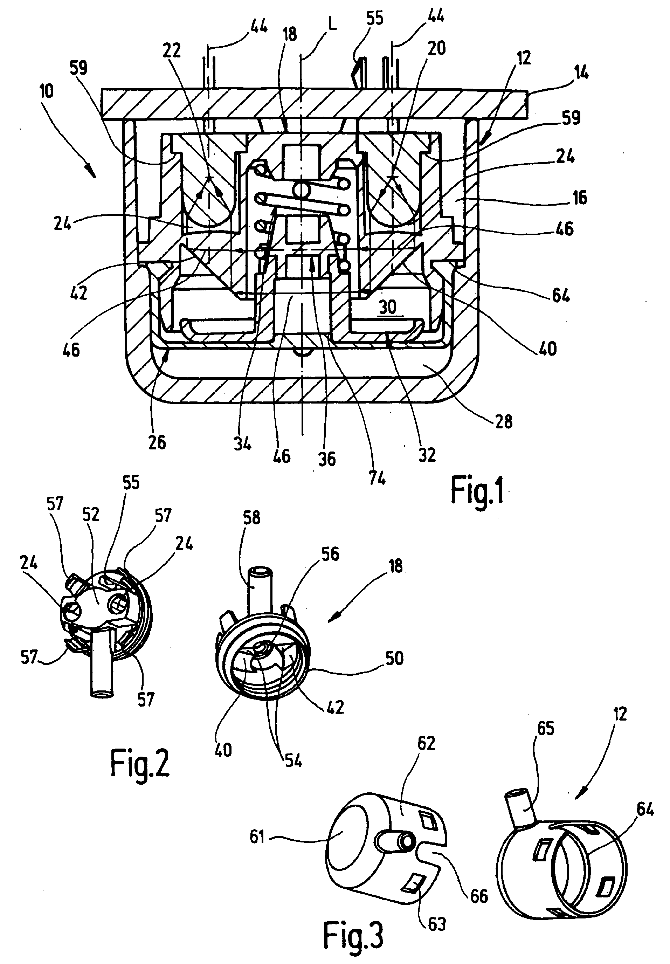

In Fig. 1 ist ein Drucksensor im Schnitt schematisch dargestellt und mit dem Bezugszeichen 10 gekennzeichnet. Der Drucksensor 10 umfaßt ein topfförmiges Gehäuse 12, das durch eine gedruckte Schaltungsplatine 14, auf die der Drucksensor aufgelötet wird, abgeschlossen wird. Das Gehäuse 12 und die Schaltungsplatine 14 umschließen einen Innenraum 16. Innerhalb des Innenraums 16 ist eine Halteeinrichtung 18 vorgesehen, die eine LED 20 und einen Phototransistor 22 in dafür vorgesehenen Aufnahmeöffnungen 24 aufnimmt.

In dem aus einem lichtundurchlässigen Material hergestellten Gehäuse 12 ist ferner eine Membran 26 angeordnet, die einen Teil des Innenraums 16 in ein erstes Teilvolumen 28 und zusammen mit der Halteeinrichtung 18 in ein zweites Teilvolumen 30 teilt. Beide Teilvolumina sind durch die Membran 26 gegeneinander abgedichtet. Abhängig von dem Druckunterschied zwischen den beiden Teilvolumina 28, 30 wird die Membran 26 nach oben oder unten ausgelenkt.

Auf der Membran 26 liegt ein Federteller 32 großflächig auf und trägt an seinem gegenüberliegenden Ende ein Ende einer Feder 34. Das andere Ende der Feder 34 stützt sich an der Halteeinrichtung 18 ab.

Der Federteller 32 trägt an seinem der Feder 34 zugewandten Ende eine Blende bzw. einen Lichtblocker 36, der auf den Federteller 32 aufgesteckt ist und durch Reibschluß gehalten wird.

Die Halteeinrichtung 18 weist eine erste Reflexionsfläche 40 und eine zweite Reflexionsfläche 42 auf. Die erste Reflexionsfläche 40 ist der LED 20 und die zweite Reflexionsfläche 42 dem Phototransistor 22 zugeordnet. Die Reflexion an den Reflexionsflächen 40, 42 erfolgt durch eine sogenannte Totalreflexion, wobei hierfür die jeweilige Neigung der Reflexionsfläche 40, 42 entsprechend gewählt werden muß. Beide Reflexionsflächen sind als Kegelflächen ausgebildet, wie dies in Fig. 2 zu erkennen ist. Die Kegelflächen sind so bemessen, daß die Lichtstrahlen der LED 20 auf eine Achse L linienfokusiert werden.

Im vorliegenden Ausführungsbeispiel ist die Reflexionsfläche 40 bzw. 42 um 45° gegenüber einer vertikalen Achse L geneigt angeordnet. Die Aufnahmeöffnungen 24 sind in der Halteeinrichtung 18 so eingebracht, daß die eingesteckte LED 20 mit ihrer optischen Achse 44 parallel zu der vertikalen Achse liegt. Gleiches gilt auch für den Phototransistor 22, dessen optische Achse 44 ebenfalls parallel zur vertikalen Achse liegt. Damit strahlt die LED 20 in einem Winkel von 45° auf die Reflexionsfläche 40 auf, die den Strahl dann um 90° ablenkt und in waagrechter Richtung zu der gegenüberliegenden Reflexionsfläche 42 reflektiert, die ihrerseits den Strahl auf den Phototransistor 22 reflektiert. Zwei im Randbereich liegende Strahlen sind beispielhaft in der Fig. 1 eingezeichnet und mit dem Bezugszeichen 46 gekennzeichnet.

In den Figuren 2 bis 6 sind nun Elemente des in Fig. 1 gezeigten Drucksensors einzeln und in perspektivischer Darstellung gezeigt. Die in Fig. 2 gezeigte Halteeinrichtung 18 umfaßt einen zylindrischen Abschnitt 50 und einen sich daran anschließenden Aufnahmeabschnitt 52. Innerhalb des zylindrischen Abschnitts 50 sind die beiden kegelflächig gestalteten Reflexionsflächen 40, 42 deutlich zu erkennen, die jeweils Teil eines Prismas 54 sind. Die beiden Prismen 54 sind, wie bereits in Fig. 1 zu erkennen, einander gegenüberliegend angeordnet. Die perspektivische Ansicht läßt des weiteren eine zentrische Öffnung 56 erkennen, die mit einem Rohrabschnitt 58 in Verbindung steht. Der Rohrabschnitt 58 verläuft dabei rechtwinklig zur Längsachse des zylindrischen Abschnitts 50 und wird von dem Aufnahmeabschnitt 52 getragen. Der Rohrabschnitt 58 und die Öffnung 56 dienen dazu, das Teilvolumen 30 mit dem ersten Druck zu beaufschlagen.

Die Fig. 2 läßt weiter erkennen, daß im Aufnahmeabschnitt 52 die beiden Aufnahmeöffnungen 24 vorgesehen sind, in die die LED 20 bzw. der Phototransistor 22 eingesteckt werden, wobei durch entsprechendes Vorsehen einer Stufe in der Innenwand der Aufnahmeöffnung 24 ein Anschlagmittel 59 geschaffen wird, das mit einer entsprechenden Flanschfläche der LED 20 bzw. des Phototransistors 22 zusammenwirkt. Damit ist der Einbau und die Positionierung bzw. Ausrichtung der LED 20 zur Reflexionsfläche 40 bzw. des Phototransistors 22 zur Reflexionsfläche 42 einfach möglich.

An dem zylindrischen Abschnitt 50 sind insgesamt vier Rastzungen 57 vorgesehen, die der rastenden Verbindung mit dem Gehäuse 12 dienen. Ferner sind zwei weitere Rastzungen 55 vorgesehen, die zur Vorfixierung des Drucksensors auf der Schaltungsplatine 14 vor dem Löten mit dieser verrasten, was in Fig. 1 gut zu erkennen ist. Dort durchgreifen die Rastzungen 55 die Schaltungsplatine 14.

Die in Fig. 2 gezeigten Prismen 54 sind aus einem lichtdurchlässigen Material gefertigt, so daß die von der LED 20 erzeugten Strahlen in die Prismen eindringen und an der jeweiligen Reflexionsfläche 40 bzw. 42 reflektiert werden können, wobei gleichzeitig eine Linienfokusierung auf die Achse L durchgeführt wird. Vorzugsweise ist die gesamte Halteeinrichtung 18 aus diesem Material gefertigt, so daß es auf einfache Art und Weise gegossen werden kann.

In Fig. 3 ist das Gehäuse 12 perspektivisch dargestellt. Das Gehäuse 12 ist topfförmig ausgebildet und besitzt einen Boden 61 sowie eine zylindrische Wand 62. In der Wand 62 sind Ausnehmungen 63 vorgesehen, in die die Rastzungen 57 eingreifen können. An der Innenfläche der Wand 62 ist eine in Umfangsrichtung verlaufende Stufe bzw. Schulter 64 ausgebildet, die auch in Fig. 1 deutlich zu erkennen ist.

Am Übergang zwischen Boden 61 und Wand 62 ist ein Rohrabschnitt 65 angebracht, der eine Verbindung ins Innere des Gehäuses 12 im Bodenbereich schafft. In dem dem Boden 61 gegenüberliegenden Bereich der Wand 62 ist eine randoffene Öffnung 66 eingebracht, die zur Aufnahme des Rohrabschnitts 58 - wie später noch beschrieben - der Halteeinrichtung 18 dient. Die Öffnung 66 liegt dabei in einer Linie zu dem Rohrabschnitt 65. Allerdings kann diese Öffnung 66 auch an anderen Stellen entlang des Umfangs der Wand 62 vorgesehen werden.

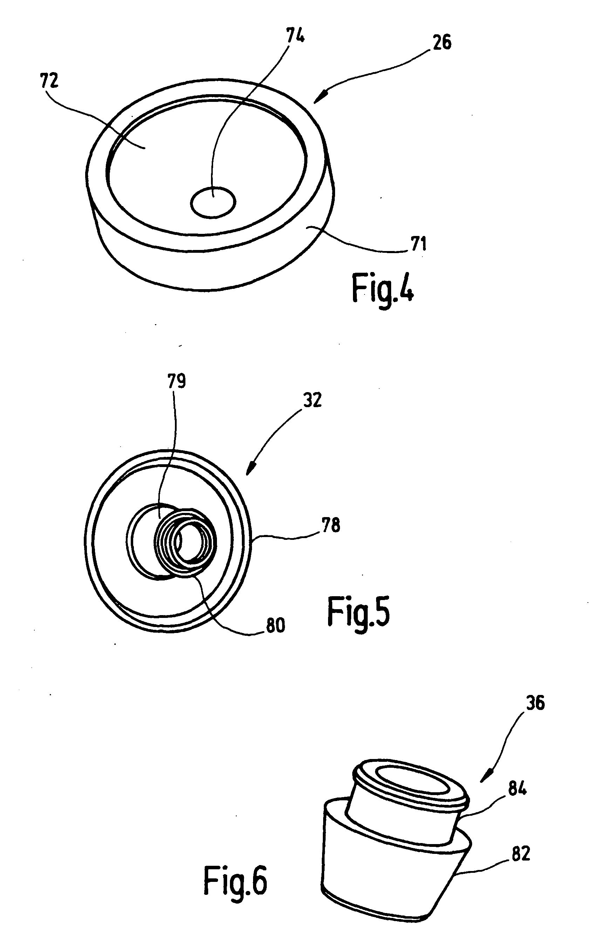

In Fig. 4 ist die kreisförmige Membran 26 in perspektivischer Darstellung gezeigt. Die Membran 26 umfaßt einen kreisförmigen Rand 71 und eine von diesem umschlossene Membranfläche 72. Zentrisch zu dieser kreisförmigen Membranfläche 72 ist ein kreisförmiger erhabener Bereich 74 vorgesehen, der auch in Fig. 1 deutlich zu erkennen ist. Die Membranfläche 72 ist aus Silicon gefertigt, um die notwendige Elastizität aufzuweisen.

In Fig. 5 ist in perspektivischer Darstellung der Federteller 32 dargestellt. Dieses rotationssymmetrische Bauteil weist an seinem einen Ende eine große Auflagefläche 78 auf, die auf der Membranfläche 72 aufliegt. Um den Federteller 32 auf der Membranfläche 72 zu zentrieren und ein Verrutschen zu verhindern, greift der erhabene Bereich 74 der Membranfläche 72 in einen rohrförmigen Abschnitt 79 ein. Auch dies ist in Fig. 1 im Querschnitt sehr gut zu erkennen. Am anderen Ende des rohrförmigen Abschnitts 79 ist eine Stufe 80 vorgesehen, an der sich die Feder 34 mit ihrem einen Ende abstützt. Darüber hinaus trägt dieser rohrförmige Abschnitt 79 den Lichtblocker 36. Zur Vermeidung von Lichtreflexionen besitzt der Federteller 32 eine schwarze Oberfläche.

Dieser Lichtblocker 36 ist in Fig. 6 perspektivisch dargestellt. Auch er ist als rotationssymmetrisches Bauteil ausgebildet und weist einen ersten kegelstumpfförmigen Abschnitt 82 und einen zylindrischen Abschnitt 84 auf. Der zylindrische Abschnitt 84 ist so ausgebildet, daß er in den rohrförmigen Abschnitt 79 des Federtellers 32 eingesteckt werden kann und dort bspw. durch Selbsthemmung reibschlüssig gehalten wird. Der kegelstumpfförmige Abschnitt 82 liegt dann auf dem rohrförmigen Abschnitt 79 auf. Auch dies ist in Fig. 1 sehr gut zu erkennen. Um jegliche Reflexion an dem Lichtblocker zu vermeiden, besitzt er eine schwarze Oberfläche.

Vorzugsweise kann der Lichtblocker 36 im Bereich des Abschnitts 82 als Fenster dienende Durchbrüche aufweisen, wobei jeweils zwei Durchbrüche einander gegenüberliegen. Durch zwei gegenüberliegende Durchbrüche kann Licht in radialer Richtung durch den Abschnitt 82 wandern.

Der Zusammenbau des in Fig. 1 gezeigten Drucksensors 10 wird nun wie folgt durchgeführt:

In den Federteller 32 wird der Lichtblocker 36 gesteckt, und anschließend wird die Feder 34 auf den rohrförmigen Abschnitt 79 aufgebracht. Danach wird diese Baueinheit auf die Membranfläche 72 gelegt und über den erhabenen Bereich 74 zentriert.

Danach wird die Halteeinrichtung 18 mit dem zylindrischen Abschnitt 50 auf diese Baueinheit aufgebracht, wobei der Rand 71 der Membran 26 über den zylindrischen Abschnitt 50 der Halteeinrichtung 18 gestülpt wird und dort bereits in eine rastende bzw. quasi rastende Verbindung gelangt. Diese Baueinheit läßt sich nun sehr einfach in das Gehäuse 12 einstecken, wobei die Befestigung über die Rastzungen 57 erfolgt, die in die Ausnehmung 63 eingreifen. Dabei wird im Bereich der Stufe 64 des Gehäuses 12 die Halteeinrichtung 18 fest gegen den Rand 71 und dieser wiederum an das Gehäuse 12 angedrückt, so daß eine gute Abdichtung erzielt wird.

Im nächsten Schritt werden dann LED 20 und Phototransistor 22 in die jeweilige Aufnahmeöffnung 24 der Halteeinrichtung 18 eingesteckt, wobei die Endposition durch den Anschlag 59 definiert wird.

Anschließend kann der Drucksensor 10 auf die Schaltungsplatine 14 aufgesetzt werden, wobei zunächst die Rastzungen 55 mit der Schaltungsplatine verrasten und eine Vorfixierung schaffen. Danach werden dann die Anschlüsse der LED 20 und des Phototransistors 22 mit der Schaltungsplatine 14 verlötet.

Der in Fig. 1 gezeigte Drucksensor arbeitet nun wie folgt:

Über den Rohrabschnitt 65 des Gehäuses 12 wird das erste Teilvolumen 28 mit einem ersten Druck beaufschlagt. Über den Rohrabschnitt 58 der Halteeinrichtung 18 wird das zweite Teilvolumen 30 mit einem zweiten Druck beaufschlagt, wobei beispielsweise einer der beiden Drücke der Umgebungsdruck sein kann. Sind die beiden Drücke unterschiedlich, ergibt sich eine Druckdifferenz, die zu einer Auslenkung der Membran 26 gegen die Kraft der Feder 34 führt. Über den Federteller 32 wird diese Auslenkung der Membran 26 auf den Lichtblocker 36 übertragen, der sich dadurch in Längsrichtung L entweder nach oben oder nach unten bewegt.

Der Lichtblocker 36, bzw. dessen kegelstumpfförmiger Abschnitt 82, liegt im Strahlweg bzw. Strahlgang der LED 20, der durch die beiden Einzelstrahlen 46 angedeutet ist. Abhängig von der Stellung des Lichtblockers 36 in Längsrichtung L wird nun ein mehr oder weniger großer Bereich des von der Reflexionsfläche 40 reflektierten Strahls 46 abgeblockt und erreicht damit den Phototransistor 22 über die Reflexionsfläche 42 nicht mehr. Aufgrund der fokusierenden Wirkung der Reflexionsflächen spielt es dabei keine Rolle, wenn die Rotationsachse des Lichtblockers etwas versetzt zu der Achse L ist.

Für den Fall, daß Durchbrüche im Lichtblocker 36 vorgesehen sind, kann der Lichtstrahl durch diese Durchbrüche hindurch treten. Die freigegebene Fläche der Durchbrüche entscheidet dabei über die Menge des abgeblockten und des durchgelassenen Lichts.

Es ergibt sich folglich, daß die Menge des Lichts, die den Phototransistor 22 erreicht, von der Position des Lichtblockers 36 und mithin von der Druckdifferenz zwischen den beiden Teilvolumina 28, 30 abhängt. Über diese Abhängigkeit kann durch entsprechende Auswertung des vom Phototransistor 22 gelieferten elektrischen Signals die Druckdifferenz ermittelt werden.

Durch entsprechende Ausgestaltung des Lichtblockers 36 und/oder der Neigung der Reflexionsflächen 40, 42 kann eine Einstellung der Charakteristik des Drucksensors in gewissem Rahmen durchgeführt werden. Auch die Feder 34 hat selbstverständlich Einfluß auf die Charakteristik des Drucksensors und wird je nach Anwendungsfall entsprechend ausgewählt.

Zusammenfassend ergibt sich, daß der Drucksensor sehr einfach und kostengünstig aufgebaut werden kann und dennoch für den Einsatz in vielen Anwendungsbereichen geeignet ist.

## Patentansprüche

1. Drucksensor mit einem Gehäuse (12), einer darin vorgesehenen, durch den zu messenden Druck auslenkbaren Membran (26), einem eine optische Achse aufweisenden Lichtmittel (LED), einem eine optische Achse aufweisenden Lichtdetektionsmittel, einem mit der Membran gekoppelten und **dadurch** auslenkbaren Lichtblocker (36), der im Strahlweg des Lichtmittels angeordnet ist, wobei das Lichtmittel und das Lichtdetektionsmittel innerhalb des Gehäuses (12) so angeordnet sind, daß ihre optischen Achsen parallel liegen, mit einer ersten dem Lichtmittel zugeordneten Reflexionsfläche (40), vorzugsweise einem ersten Prisma, und einer zweiten dem Lichtdetektionsmittel zugeordneten Reflexionsfläche (42), vorzugsweise einem zweiten Prisma, wobei sich ein ununterbrochener Strahlweg vom Lichtmittel über die beiden Reflexionsflächen zum Lichtdetektionsmittel ergibt und der Lichtblocker (36) zwischen den beiden Reflexionsflächen angeordnet ist, **dadurch gekennzeichnet, daß** eine Halteeinrichtung (18) vorgesehen ist, die in das Gehäuse einbringbar ist und jeweils eine Aufnahmeöffnung (24) für das Lichtmittel und das Lichtdetektionsmittel umfaßt, wobei die Halteeinrichtung (18) die erste und die zweite Reflexionsfläche im Bereich der jeweiligen Aufnahmeöffnung (24) trägt und aus einem lichtdurchlässigen Material, vorzugsweise einem Kunststoff, hergestellt ist.

2. Drucksensor nach Anspruch 1, **dadurch gekennzeichnet, daß** der Lichtblocker (36) einen kegelstumpfförmigen Abschnitt (82) aufweist, der im Strahlweg liegt.

3. Drucksensor nach Anspruch 1, **dadurch gekennzeichnet, daß** die Halteeinrichtung (18) zumindest zwei außen angebrachte Rastnasen aufweist, die mit entsprechenden Ausnehmungen (63) im Gehäuse (12) rastend zusammenwirken.

4. Drucksensor nach einem der vorhergehenden Ansprüche, **dadurch gekennzeichnet, daß** das Gehäuse (12) eine innenliegende, über den gesamten Umfang sich erstreckende Schulter (64) aufweist, auf der eine entsprechende Auflagefläche (78) der Halteeinrichtung (18) aufliegt, wobei zwischen der Auflagefläche (78) und der Schulter (64) ein Randbereich der Membran (26) festgeklemmt ist.

5. Drucksensor nach einem der vorhergehenden Ansprüche, **dadurch gekennzeichnet, daß** das Lichtmittel eine LED (20) und das Lichtdetektionsmittel ein Phototransistor (22) ist.

## Claims

1. Pressure sensor comprising a housing (12), a membrane (26) arranged in said housing and being deflectable by the pressure to be measured, a light means (LED) having an optical axis, a light detection means having an optical axis, a light blocker (36) that is coupled to the membrane and that can be deflected thereby, said blocker being arranged in the beam path of the light means, wherein the light means and the light detection means are arranged inside the housing (12) such that their optical axis lie parallel to one another, a first reflection surface (40) assigned to the light means, preferably a first prism, and a second reflection surface (42) assigned to the light detection means, preferably a second prism, wherein an uninterrupted beam path from the light means through both reflection surfaces to the light detection means is obtained and the light blocker (36) is arranged between both reflection surfaces, **characterized in that** a holding device (18) is provided which is insertable into the housing and comprises a receiving opening (24) for the light means and the light detection means each, the holding device (18) supporting the first and the second reflection surface in the region of the respective receiving opening (24) and being made of a transparent material, preferably a plastic material.

2. Pressure sensor according to claim 1, **characterized in that** the light blocker (36) comprises a truncated portion (82) which lies in the beam path.

3. Pressure sensor according to claim 1, **characterized in that** the holding device (18) comprises at least two snap-in pins mounted on the exterior which interact with respective recesses (63) in the housing (12) in an engageable manner.

4. Pressure sensor according to any of the preceding claims, **characterized in that** the housing (12) comprises an interior shoulder (64) extending along the whole circumference and on which a respective supporting surface (78) of the holding device (18) is lying, wherein a edge region of the membrane (26) is clamped between the supporting surface (78) and the shoulder (64).

5. Pressure sensor according to any of the preceding claims, **characterized in that** the light means is a LED (20) and the light detection means is a phototransistor (22).

## Revendications

1. Capteur de pression comprenant un boîtier (12), une membrane (26) prévue à l'intérieur, pouvant être déviée par la pression à mesurer, un agent lumineux (DEL) présentant un axe optique, un moyen de détection de la lumière présentant un axe optique, un dispositif de blocage de la lumière (36) couplé à la membrane et pouvant être dévié par celle-ci, qui est disposé dans la trajectoire du faisceau de l'agent lumineux, l'agent lumineux et le moyen de détection de la lumière étant disposés à l'intérieur du boîtier (12) de telle sorte que leurs axes optiques soient parallèles, et comprenant une première surface de réflexion (40) associée à l'agent lumineux, de préférence un premier prisme, et une seconde surface de réflexion (42) associée au moyen de détection de la lumière, de préférence un second prisme, une trajectoire de faisceau ininterrompue de l'agent lumineux étant obtenue, en passant par les deux surfaces de réflexion jusqu'au moyen de détection de la lumière, et le dispositif de blocage de la lumière (36) étant disposé entre les deux surfaces de réflexion, **caractérisé en ce qu'**il est prévu un dispositif de support (18) pouvant être inséré dans le boîtier et comprenant respectivement une ouverture de réception (24) pour l'agent lumineux et le moyen de détection de la lumière, le dispositif de support (18) portant les première et seconde surfaces de réflexion dans la zone de l'ouverture de réception respective (24), et étant fabriqué à partir d'un matériau laissant traverser la lumière, de préférence un plastique.

2. Capteur de pression selon la revendication 1, **caractérisé en ce que** le dispositif de blocage de la lumière (36) présente une section en forme de cône tronqué (82) qui se trouve dans la trajectoire du faisceau.

3. Capteur de pression selon la revendication 1, **caractérisé en ce que** le dispositif de support (18) présente au moins deux ergots d'encliquetage placés à l'extérieur, qui coopèrent de manière encliquetable avec des évidements correspondants (63) dans le boîtier (12).

4. Capteur de pression selon l'une quelconque des revendications précédentes, **caractérisé en ce que** le boîtier (12) présente un épaulement (64) s'étendant à l'intérieur, sur toute la circonférence, sur lequel repose une surface d'appui (78) correspondante du dispositif de support (18), une zone de bord de la membrane (26) étant calée entre la surface d'appui (78) et l'épaulement (64).

5. Capteur de pression selon l'une quelconque des revendications précédentes, **caractérisé en ce que** l'agent lumineux est une DEL (20) et le moyen de détection de lumière est un phototransistor (22).
